# NEUE EUROPÄISCHE PATENTSCHRIFT

(11) **EP 3 717 704 B2**
(45) Veröffentlichungstag und Bekanntmachung des Hinweises auf die Entscheidung über den Einspruch: **24.01.2024**
(45) Hinweis auf die Patenterteilung: 17.03.2021
(21) Anmeldenummer: 19701055.6
(22) Anmeldetag: 14.01.2019
(51) Int. Cl.: E02B 3/02

(54) **VERWENDUNG EINER VORRICHTUNG FÜR EINEN SEDIMENTTRANSFER IN GEWÄSSERN**
USE OF A DEVICE FOR A SEDIMENT TRANSFER IN WATERS
UTILISATION D'UN DISPOSITIF POUR UN TRANSFERT DE SÉDIMENT DANS DES ÉTENDUES D'EAU

(30) Priorität: 22.02.2018 DE 102018104038
(43) Veröffentlichungstag der Anmeldung: 07.10.2020
(73) Patentinhaber: Detering, Michael, 59368 Werne (DE)
(72) Erfinder: Detering, Michael, 59368 Werne (DE)
(74) Vertreter: Geskes, Christoph
(86) Internationale Anmeldenummer: PCT/EP2019/050802
(87) Internationale Veröffentlichungsnummer: WO 2019/161996

(56) Entgegenhaltungen:
- EP-A1- 1 811 127
- EP-A1- 2 520 726
- EP-A1- 2 644 781
- WO-A1-2017/184005
- DE-A1- 2 813 713
- DE-C2- 19 942 472
- GB-A- 2 161 297
- US-A- 3 554 011
- US-A- 3 565 491
- "Manage dams for sediment flow", REFORM wiki, 25 June 2015 (2015-06-25),
- "Modularität, Automatisierung und Flexibilität innovatves konzept sur sedimentmobilisierung", Tesco technical solutions, 20 April 2017 (2017-04-20),
- "Historical case study - Early EDDY Pump Testing", Eddy pump corporation, 28 June 1996 (1996-06-28), Anaheim, California, United States Retrieved from the Internet: URL:https://cedb.asce.org/CEDBsearch/recor d.jsp?dockey=0099782
- "Remote controlled dredges", DRAGFLOW, 2016,
- Datenblatt Dragflow DRP18, ohne Datum;Referenzfolien für DRP18,10.05.2016
- "Production meter system evaluation on the dustpan dredge jadwin", US Army engineer waterways experiment station, August 1991 (1991-08),
- "software and gps for dredging", Seascape, 2012,
- "brochure der fa", Schwingungsschutz für Pumpen, November 2016 (2016-11),
- Wikipedia Artikel "Nephelometrie Turbidity Unit" (URL: https7Zde.wikipedia.org/w/index.php?title= Nephelometric_Turbidity_Unit&oldid=1936697 49)
- Messungen von Strömungsfeld und suspendierten Sedimenten an Entsandern von Wasserkraftanlagen", Paschmann et al., ETH Zürich, Berichte des Lehrstuhls und der Versuchsanstalt für Wasserbau und Wasserwirtschaft 134, 2016

## Beschreibung

Die vorliegende Erfindung betrifft eine Verwendung einer Vorrichtung für einen Sedimenttransfer in Gewässern.

Die Morphologie von Fließgewässern und Staugewässern wird von dem Wasser, aber auch von Schwebstoffen und Sedimenten beeinflusst. Schwebstoffe und Sedimente finden sich im Wasser praktisch aller Flüsse und stehender Gewässer. Im Mittellauf unverbauter Fließgewässer stehen Sedimentations- und Erosionsprozesse meistens im Gleichgewicht. In diesem Zustand ändert sich das Gewässerbett nur geringfügig. Wird ein Gewässer jedoch aufgestaut oder erweitert, z. B. durch künstliche Hafenanlagen oder Speicherbecken oder Stauseen zur Trinkwassergewinnung und/oder Energieerzeugung, ändert sich örtlich der Fließquerschnitt und die Strömungsgeschwindigkeit insbesondere des Gewässers unterhalb derartiger gestauter Gewässer, im sogenannten Unterwasser. In der Folge setzt sich am Gewässerboden des gestauten Gewässers vermehrt Sediment ab. Sediment umfasst abgesetzte Schwebteilchen, Sande, Bodenmaterial, aber auch organisches Material von Pflanzen und schließlich auch Kiesel u. ä. Besonders auffällig ist eine Sedimentation in Staubecken von Wasserkraftwerken, wie z. B. Pumpspeicherkraftwerken, bei denen zwischen den einzelnen Betriebsvorgängen, nämlich dem Pumpbetrieb und dem Turbinenbetrieb, Wasser in relativer Ruhe verharrt. Das in diesen Fällen abgelagerte Sediment im Staubecken wird anders als in naturbelassenen Fließgewässern nicht mehr im langjährigen Verlauf erodiert, sondern nimmt im Laufe der Zeit am Gewässerboden an Menge zu und vermindert dadurch die nutzbare Tiefe und letztendlich das nutzbare Volumen zur Energiegewinnung bzw. Energiespeicherung.

Übliche aus dem Stand der Technik bekannte Verfahren zur Sedimenttransferierung, mit denen an einem Gewässerboden abgesetztes Sediment entfernt wird, um eine Funktionsfähigkeit des insbesondere gestauten Gewässers wieder zur Verfügung zu stellen, beschränken sich im Wesentlichen auf eine manuelle Entnahme, die jedoch aufwendig und kostenintensiv ist. Dabei kann auch beispielsweise eine manuelle Baggerung mittels Hopperbagger, bei der aufgenommenes Sediment in den Laderaum eines Baggerschiffs verbracht und an einen anderen Ort im Gewässer oder zur weiteren Verwendung an Land transportiert wird, durchgeführt werden, was aber ebenfalls sehr aufwendig und kostenintensiv ist. Die WO 2008/122377 A1 schlägt ein Verfahren zur Sedimentverfrachtung aus Staugewässern vor, welches energetisch effizient ist und mit dem es möglich ist, eine weitgehende Annäherung an ein natürliches, ungestautes Gewässersystem insbesondere in einem Unterwasser des gestauten Gewässers zu erzielen. Hierzu werden in einem Sedimentbereich eines Staubeckens Sedimentablagerungen aufgenommen und in einen Erosionsbereich in der Nähe eines oder mehrerer Abflussorgane eines Staubeckens verfrachtet, wodurch die Sedimente durch die von der Strömung verursachten Erosionsprozesse des ablaufenden Wassers in fließende Gewässer abtransportiert werden.

US 3,565,491 offenbart ein stationäres Verfrachtungssystem, insbesondere für Sand aus einem Graben oder einer Schute an Land, beispielsweise einen Strand, wobei mittels unter hohem Druck stehendem Wasser zum Beispiel Sand aufgewühlt und so ein Wasser-Sand-Gemisch in der Nähe des Einlasses einer Tauchpumpe erzeugt wird, um eine für das Pumpen mit der Tauchpumpe geeignete Mischung flüssiger und fester Bestandteile zu erhalten.

Aufgabe der vorliegenden Erfindung ist es, ein im Vergleich zum Stand der Technik verbessertes Verfahren für eine Transferierung von Sediment in Gewässern und eine hierfür geeignete Vorrichtung zur Verfügung zu stellen, welche geeignet ist, für eine Vielzahl von Sedimenttransferierungen eingesetzt werden zu können.

Diese Aufgabe wird erfindungsgemäß gelöst durch eine Verwendung gemäß Anspruch 1. Vorteilhafte Ausgestaltungen sind in den Unteransprüchen angegeben.

Die vorliegende Erfindung betrifft eine Verwendung einer Vorrichtung für einen Sedimenttransfer in Gewässern.

Die Vorrichtung für einen Sedimenttransfer in Gewässern umfasst mindestens eine Saugleitung, mindestens ein Aufnahmemittel zur Aufnahme von Sediment und mindestens eine Druckleitung zur Transferierung des aufgenommenen Sedimentes. Dabei ist nachfolgend dem mindestens einen Aufnahmemittel mindestens eine Pumpvorrichtung und mindestens eine Messvorrichtung zur Bestimmung einer Sedimentkonzentration des aufgenommenen Sedimentes angeordnet, wobei die Vorrichtung weiterhin eine Regeleinheit umfasst, die eine erste Schnittstelle zur Einspeisung von Sollwerten und eine zweite Schnittstelle für die mindestens eine Messvorrichtung umfasst und eine Sedimentkonzentration in der mindestens einen Saugleitung und/oder in der mindestens einen Druckleitung bestimmt und in Abhängigkeit von dieser Sedimentkonzentration eine Leistung der Pumpvorrichtung einstellbar ist, wobei die Regeleinheit ein Positionierungssystem mit mindestens einem Positionsgebungsmittel umfasst, so dass über eine Schnittstelle eine örtliche Position dem Aufnahmemittel zur Verfügung stellbar ist und über das Positionierungssystem die Vorrichtung auf einem Gewässer verfahrbar ausgebildet ist, wobei der Transfer des Sedimentes in mindestens ein Abflussorgan eines gestauten Gewässers, in die Nähe mindestens eines Abflussorgans eines gestauten Gewässers, über ein Sperrbauwerk eines gestauten Gewässers oder um dieses herum in ein Unterwasser und/oder in ein Fließgewässer erfolgt. Ergänzend kann dabei auch eine Leistung des Aufnahmemittels eingestellt werden, wodurch beispielsweise eine Änderung der Drehzahl und/oder eines Wasserdrucks erfolgt. Vorteilhafterweise sind das mindestens eine Aufnahmemittel und die mindestens eine Pumpvorrichtung räumlich von einander getrennt angeordnet, insbesondere getrennt durch die mindestens eine Saugleitung. Die Saugleitung ist zwischen Aufnahmemittel und der Saugseite der Pumpvorrichtung ausgebildet beziehungsweise angeordnet, und ist bevorzugt als ein Schlauch ausgebildet. Die Druckleitung ist hingegen nachfolgend der Pumpvorrichtung angeordnet auf einer Druckseite derselben. Die Druckleitung ist bevorzugt zumindest teilweise als Schlauch ausgebildet zur Transferierung des aufgenommenen Sedimentes, beispielsweise an Land, auf ein Schiff, ein Floß oder über eine Staumauer in ein Unterwasser. Aber auch eine Anordnung mit einem kombinierten Mittel aus Aufnahmemittel und Pumpvorrichtung ist möglich. Eine solche kann dann auf den Grund eines Gewässers, aus dem Sediment entnommen und transferiert werden soll, angeordnet werden. Bevorzugt ist aber eine Anordnung der mindestens einen Pumpvorrichtung beabstandet von dem Aufnahmemittel, bevorzugt auf einer schwimmfähigen Vorrichtung, insbesondere einem Ponton oder Boot oder schwimmbarer Plattform, die weiter bevorzugt als eine Zentraleinrichtung dienen kann. Dabei können bei Vorsehung von zwei oder mehre Pumpvorrichtungen diese auf einer einzigen schwimmfähigen Vorrichtung, aber alternativ auch auf mehreren Vorrichtung, beispielsweise eine jede einzelne Pumpvorrichtung auf genau einer schwimmfähigen Vorrichtung, angeordnet sein. Bevorzugt ist das mindestens eine Aufnahmemittel auf einem Grund, in einen Grund eingreifend und/oder über einem Grund eines Gewässers angeordnet. Bevorzugt ist das mindestens eine Aufnahmemittel wenig beabstandet, beispielsweise mit einem Abstand in einem Bereich von etwa 1 cm bis etwa 100 cm von einem Grund des Gewässers, angeordnet. Bei einer Anordnung des mindestens einen Aufnahmemittels auf dem Grund wird dieses insbesondere über den Grund geschleppt, insbesondere, wenn dieses als Spülkopf oder Fräse, letztere auch in Kombination mit einer oder mehreren Spüldüsen oder Saugdüsen, ausgebildet ist. Bevorzugt ist das eine Aufnahmemittel einer Pumpvorrichtung zugeordnet, es können jedoch auch zwei oder mehr Aufnahmemittel einer Pumpvorrichtung zugeordnet sein. Vorteilhaft an einer beabstandeten Anordnung von der mindestens einen Pumpvorrichtung und dem mindestens einen Aufnahmemittel ist, dass das mindestens eine Aufnahmemittel ohne eine weitere Sicherung aufgrund des geringeren Gewichtes als bei einer Ausführung mit kombinierter Pumpvorrichtung über den Grund eines Gewässers mittels der mindestens einen Saugleitung geführt werden kann, ohne dass eine separate Steuerung hierfür notwendig ist. Eine Verfahrbarkeit der schwimmfähigen Vorrichtung ist zur Führung des mindestens einen Aufnahmemittels ausreichend. Über eine bekannte Länge der mindestens einen Saugleitung ist die Position des mindestens einen Aufnahmemittels dabei eindeutig bestimmbar. Auch kann bei dieser bevorzugten beabstandeten Anordnung die mindestens eine Messvorrichtung hinter der mindestens einen Pumpvorrichtung angeordnet werden, so dass die Messung der Sedimentkonzentration mit hoher Genauigkeit erfolgen kann. Die mindestens eine Messvorrichtung ist bevorzugt auf der schwimmfähigen Vorrichtung nachfolgend der mindestens einen Pumpvorrichtung angeordnet, und weiter bevorzugt getrennt von dieser durch mindestens einen Kompensator, wie weiter unten ausgeführt.

Das mindestens eine Aufnahmemittel dient insbesondere der Aufnahme von Sediment. Durch die dem mindestens einen Aufnahmemittel nachgeordnete Anordnung der mindestens einen Pumpvorrichtung, bevorzugt beabstandet wie vorstehend beschrieben, nimmt es Sediment durch Erzeugung eines Saugeffektes auf und transportiert dies in Richtung der mindestens einen Pumpvorrichtung. Das mindestens eine Aufnahmemittel hat des Weiteren bevorzugt die Funktion, Sediment von einem Gewässergrund zu lösen und/oder dieses aufzulockern. Eine solche Lösung und/oder Auflockerung von Sediment von einem Gewässergrund erfolgt bevorzugt durch hydraulischen oder mechanischen Krafteintrag. Das Aufnahmemittel ist bevorzugt als Fräse, Saugdüse, Spüldüse und/oder Saugkopf ausgebildet. Besonders bevorzugt ist es als eine Fräse ausgebildet, an der mindestens eine, bevorzugt zwei, weiter bevorzugt mehrere Saugdüsen oder Spüldüsen angeordnet sind. Die Fräse greift in das Sediment ein und lockert oder löst dieses vom Gewässergrund, und liegt dabei auf dem Gewässergrund bevorzugt auf. Die eine oder mehreren Spüldüsen oder Saugdüsen sind an der Fräse angeordnet, bevorzugt beabstandet vom Gewässergrund, insbesondere in einem Abstand von etwa 1 cm bis etwa 100cm.

Bevorzugt wird das mindestens eine Aufnahmemittel auf einem Gewässergrund positioniert. Bevorzugt ist es über mindestens eine Saugleitung mit der mindestens einen Pumpvorrichtung verbunden. Das Aufnahmemittel weist weiter bevorzugt eine Lockerungsfunktion für Sediment auf einem Gewässerboden auf. Hierzu ist es bevorzugt als Fräse mit mindestens einer Saugdüse und/oder Spüldüse ausgebildet, die über mindestens eine Saugleitung mit mindestens einer Pumpvorrichtung in Verbindung steht. Bei Ausübung auch einer Lockerungsfunktion ist weiter bevorzugt das mindestens eine Aufnahmemittel beabstandet von der mindestens einen Pumpvorrichtung angeordnet, insbesondere wie vorstehend und weiter oben beschrieben, da eine Sedimentlockerung die Pumpenfunktion beeinträchtigen kann. Auch wäre eine Kombination aus Aufnahmemittel mit Sedimentlockerungsfunktion und Pumpvorrichtung zu schwer, um ohne zusätzliche Hilfsmittel sicher über einen Gewässerboden bewegt zu werden. Bevorzugt wird das mindestens eine Aufnahmemittel über mindestens eine Saugleitung, und nur über mindestens eine Saugleitung, verbunden mit einer schwimmfähigen Vorrichtung am Gewässerboden geführt. Zusätzliche Steuerungsmittel etc. sind dann nicht notwendig und können weggelassen werden. Aufgrund ihres Gewichtes folgt das mindestens eine Aufnahmemittel der Oberfläche des Gewässergrundes und kann dort Sediment aufnehmen. Gegebenenfalls können dabei auch Ballastmittel an dem mindestens einen Aufnahmemittel angeordnet sein, sollte dessen Eigengewicht für eine Führung auf der Gewässergrundoberfläche nicht ausreichend sein. Das Aufnahmemittel kann aber auch durch Hilfsmittel, beispielsweise mehr als ein Seil, mehr als eine Kette oder Kombinationen hieraus, relativ zu der schwimmenden Vorrichtung oder den schwimmenden Vorrichtungen, unter Wasser in Position gehalten werden, wobei die Länge und Position der Hilfsmittel veränderlich sein kann.

Durch die Vorrichtung ist es vorteilhafterweise möglich, eine gezielte Sedimenttransferierung aus einem Gewässer in ein anderes Gewässer, beispielsweise ein Unterwasser oder ein Fließgewässer oder aber an einen Lagerort außerhalb eines Gewässers an Land zur Aufbereitung des transferierten Sedimentes durch Aufbereitungsanlagen, zu erreichen. Die Vorrichtung und das mit dieser durchführbare Verfahren kann damit sehr kosteneffizient eingesetzt bzw. durchgeführt werden. Insbesondere wird auch bei möglichen Fehlfunktionen des Aufnahmemittels, wodurch dann überwiegend nur Wasser oder Schwebstoffe anstatt Sediment aufgenommen, gefördert und transferiert wird, solches erkennbar und Gegenmaßnahmen sind, auch automatisiert, einstellbar. Besonders bevorzugt arbeitet die Vorrichtung vollautomatisiert, so dass das auf dieser durchführbare Verfahren kostengünstig aufgrund einer auch möglichen Fernwartung und Regelung durchführbar ist. Hierdurch werden insbesondere durch die Einsparung von Arbeitsstunden erhebliche Kosteneinsparungen ermöglicht. Schließlich ist es vorteilhafterweise mit der Vorrichtung und dem Verfahren möglich, in einem Gewässer, in welches Sediment transferiert wird, die dortige Sedimentkonzentration naturnah einzustellen, so dass Probleme, beispielsweise eine Kolmation eines gegebenenfalls vorhandenen Kieslückensystems, verhinderbar sind. In Voruntersuchungen kann hierzu eine transferierbare Sedimentkonzentration beispielsweise eines Unterwassers eines gestauten Gewässers oder eines Fließgewässers, in welches das Sediment transferiert wird, ermittelt werden und auf Grundlage eines hierdurch ermittelten Sollwertes, der insbesondere ein Grenzwert der transferierbaren Sedimentmenge ist, über eine Einspeisung in die Regeleinheit der Vorrichtung und in Abhängigkeit der mittels der mindestens einen Messvorrichtung eine Leistung der mindestens einen Pumpvorrichtung und/oder des mindestens einen Aufnahmemittels derart eingestellt werden, dass eine für ein Unterwasser oder aber Fließgewässer naturnahe Sedimentkonzentration einstellbar ist.

Erfindungsgemäß umfasst die Regeleinheit ein Positionierungssystem mit mindestens einem Positionsgebungsmittel, so dass über eine Schnittstelle eine örtliche Position dem Aufnahmemittel zur Verfügung stellbar ist. Hierdurch kann eine gezielte Führung des Aufnahmemittels auf einem Gewässerboden erzielt werden. Hierbei können auch weitere Vorgaben berücksichtigt werden, beispielsweise die Position einer Zentraleinheit in der Vorrichtung, bevorzugt in Form einer schwimmfähigen Vorrichtung, bevorzugt mit mindestens einem Ponton, die die Regeleinheit, ggf. aber auch die mindestens eine Pumpvorrichtung und/oder die mindestens eine Messvorrichtung, umfasst. Des Weiteren kann ein Beckenpegel beispielsweise eines Staubeckens als auch die Länge der mindestens einen Saugleitung als auch eine Fahrtrichtung der Vorrichtung berücksichtigt werden, um eine örtliche Position dem Aufnahmemittel zur Verfügung zu stellen beziehungsweise die Position des Aufnahmemittels zu bestimmen und darzustellen. Erfindungsgemäß ist über das Positionierungssystem die Vorrichtung auf einem Gewässer verfahrbar ausgebildet. Die Verfahrung der Vorrichtung erfolgt vorteilhafterweise kontinuierlich. Die Verfahrung erfolgt in Hinblick auf das mindestens eine Aufnahmemittel als auch die mindestens eine Zentraleinheit. Die Zentraleinheit mit dem mindestens einen Ponton kann dabei Antriebsmittel wie Motoren oder Propeller aufweisen, ist jedoch besonders bevorzugt über ein Seil-Winden-System verfahrbar ausgebildet. Über die Verbindung durch die mindestens eine Saugleitung mit dem mindestens einen Aufnahmemittel ist dann durch eine Verfahrung der Zentraleinheit mit dem mindestens einen Ponton eine genaue örtliche Positionierung des Aufnahmemittels gemäß den ermittelten Werten ermöglicht.

In einer besonders bevorzugten Ausführungsform der Vorrichtung ist die mindestens eine Messvorrichtung in einer Förderrichtung des aufgenommenen Sedimentes nach der mindestens einen Pumpvorrichtung angeordnet. Besonders bevorzugt hieran ist, dass eine durch die mindestens eine Pumpvorrichtung erfolgte Verquirlung des Sediment-Wasser-Gemisches Absetzprobleme bzw. eine Schichtung einer Wassersäule vermieden werden, so dass die durch die mindestens eine Messvorrichtung erfolgte Messung allenfalls wenig fehlerbehaftete Werte in Hinblick auf die zu ermittelnde Sedimentkonzentration zur Verfügung stellt. Die Messgenauigkeit der mindestens einen Messvorrichtung ist durch eine derartige Anordnung deutlich erhöht. Besonders bevorzugt erfolgt dabei die Anordnung der mindestens einen Messvorrichtung in einer Förderrichtung des aufgenommenen und geförderten Sedimentes etwa 0,1 m bis etwa 10 m, bevorzugt etwa 0,3 m bis etwa 5 m, noch weiter bevorzugt 0,5 m bis etwa 2 m hinter der mindestens einen Pumpvorrichtung. Ist der Abstand zwischen der mindestens einen Pumpvorrichtung und der mindestens einen Messvorrichtung deutlich größer als 10 m, beispielsweise 20 m, sinkt die Genauigkeit der Messwerte für die Sedimentkonzentration aufgrund der dann abnehmenden Verquirlung oder Verwirbelung mit Setzungserscheinungen beziehungsweise Schichtungen von Sediment in der Saugleitung und/oder Druckleitung, bevorzugt in der Druckleitung oder zumindest nachgeordnet der mindestens einen Pumpvorrichtung. Bevorzugt ist die mindestens eine Messvorrichtung unmittelbar nachfolgend einem Kompensator, der Teil der Druckleitung ist, oder unmittelbar der mindestens einen Pumpvorrichtung nachfolgend angeordnet.

In einer besonders bevorzugten Ausführungsform der Vorrichtung ist zwischen der mindestens einen Pumpvorrichtung und der mindestens einen Messvorrichtung mindestens ein Kompensator zu einer Schwingungsdämpfung bzw. Schwingungsunterdrückung angeordnet. Unter Schwingungen im Sinne der vorliegenden Erfindung werden dabei auch Vibrationen etc. verstanden, die insbesondere durch die mindestens eine Pumpvorrichtung, aber auch durch einen Seil-Winden-Antrieb bzw. Motoren oder Propeller zur Erzielung einer Verfahrbarkeit der Vorrichtung entstehen. Durch den Kompensator ist eine Unterdrückung oder Verringerung dieser Schwingungen ermöglicht, die das Messergebnis verfälschen würden, auch durch Beeinflussung einer Verwirbelung der Sedimente auf der Druckseite der Pumpvorrichtung vor der mindestens einen Messvorrichtung. Bevorzugt ist in der dem Kompensator nachgeordneten mindestens einen Messvorrichtung einerseits eine hinreichende, aber andererseits auch keine zu hohe Verwirbelung der Sedimente gegeben, so dass eine Messung sinnvoll vorgenommen werden kann. Es ist auch zu berücksichtigen, dass Ablagerungen und Schichtungen im Kompensator selbst oder einem mit diesem verbundenen Schlauch vor der Messvorrichtung vermieden werden müssen, da diese das Messergebniss verfälschen würden. Der Kompensator kann unmittelbar nachfolgend der Pumpvorrichtung angeordnet sein, aber auch beabstandet von dieser. In einer besonders bevorzugten Ausführungsform ist nachfolgend dem Kompensator in Förderrichtung des aufgenommenen geförderten Sedimentes, bevorzugt unmittelbar nachfolgend, die mindestens eine Messvorrichtung angeordnet. Der Kompensator ist Teil der Druckleitung, so dass durch diesen ein Druckleitungsabschnitt zwischen Pumpvorrichtung und Messvorrichtung zur Verfügung gestellt wird. Nachfolgend der Messvorrichtung ist dann in Förderrichtung des aufgenommenen und geförderten Sedimentes der weitere Teil der mindestens einen Druckleitung angeordnet, der zu einer Sedimentabgabe führt. Der Kompensator weist bevorzugt eine Länge in einem Bereich von etwa 0,1 m bis etwa 10 m, bevorzugt etwa 0,1 m bis etwa 5 m, noch weiter bevorzugt 0,1 m bis etwa 2 m, auf, gemessen ab Verbindung zu der mindestens einen Pumpvorrichtung. Der Kompensator kann beispielsweise als Schlauch, Schlauchstück, Stopfbuchse und/oder Wellrohr ausgebildet sein.

In einer besonders bevorzugten Ausführungsform der Vorrichtung sind die Sollwerte ausgewählt aus einer Gruppe umfassend einen Soll-Räumbereich des zu transferierenden Sedimentes, Förderzeiten, Tiefenangaben des Gewässers und/oder Grenzwerte der zu transferierenden Sedimentkonzentration. Die Grenzwerte der zu transferierenden Sedimentkonzentration, die von einem Sedimentbedarf beispielsweise eines Unterwassers oder eines Fließgewässers, in welches die Sedimente transferiert werden, abhängt, sind relevant in Hinblick auf die Regelung und Einstellung einer Sedimentkonzentration in der Druckleitung und/oder Förderleitung in der Vorrichtung. Dann kann das Verfahren auch effizient und mit dem Ziel der Herstellung eines naturnahen Zustandes beispielsweise in einem Unterwasser durchgeführt werden. Ein Soll-Räumbereich des zu transferierenden Sedimentes ist beispielsweise durch ein Staubecken und dessen Ausbildung des Beckenbodens als auch diejenigen Bereiche in einem solchen Staubecken vorgegeben, in welchem Sedimentablagerungen vorliegen. Üblicherweise liegt in einem solchen Staubecken ein Sedimentbereich und ein Erosionsbereich vor, wobei der Erosionsbereich vor Grundablässen des Staubeckens vorhanden ist. Gerade jedoch bei Pumpspeicherwerken kann auch der Erosionsbereich ausgesprochen klein sein bzw. nahezu verschwinden, je nach Betriebszustand des Pumpspeicherkraftwerkes. Förderzeiten als Sollwerte sind insbesondere relevant, um eine automatisierte Verfahrung ohne dauerhafte Anwesenheit von Betriebspersonal für die Vorrichtung zur Verfügung zu stellen, denn die Vorrichtung kann beispielsweise auch über eine Fernwartung betrieben werden. Förderzeiten sind abhängig beispielsweise von dem Betrieb einer mit dem gestauten Gewässer zusammenhängenden Energieerzeugung, natürlichen Ereignissen wie Starkregenfällen oder Schneeschmelze und ähnlichem. Bevorzugt erfolgt eine bathymetrische Steuerung der Vorrichtung, es erfolgt also eine örtliche Steuerung des mindestens einen Aufnahmemittels anhand einer topographischen Gestalt des betreffenden Gewässerbodens, wobei diese Informationen als Sollwerte vorgegeben werden.

In einer weiteren Ausführungsform der Vorrichtung ist mindestens eine Probenentnahmestelle mit mindestens einem Probenhahn vorgesehen. Hierdurch kann eine Untersuchung der Wasserqualität des geförderten und zu transferierenden Sedimentes festgestellt werden. Dabei kann die Probenentnahmestelle auch in einer Bypass-Leitung vorgesehen sein, um einen dauerhaften Betrieb der Vorrichtung sicherzustellen und gleichzeitig eine Probe des aufgenommenen und geförderten Sediment-Wasser-Gemisches zu entnehmen. Eine Probenentnahmestelle ist bevorzugt in Förderrichtung des aufgenommenen und zu transferierenden Sedimentes nachfolgend in der mindestens einen Messvorrichtung angeordnet.

Es wird ein Verfahren für eine Transferierung von Sediment in Gewässern vorgeschlagen, wobei über eine Vorrichtung, insbesondere eine solche wie vorstehend beschrieben, mit mindestens einer Saugleitung mit mindestens einem Aufnahmemittel Sediment aus dem Gewässer mittels einer Pumpvorrichtung aufgenommen und über mindestens eine Druckleitung an einen anderen Ort transferiert wird, wobei über mindestens eine Messvorrichtung eine Sedimentkonzentration des aufgenommenen Sedimentes in der mindestens einen Saugleitung und/oder in der mindestens einen Druckleitung in einer Förderrichtung nach dem Aufnahmemittel bestimmt wird und über eine Regeleinheit mit Sollwerten verglichen und in Abhängigkeit der derart ermittelten Werte eine Leistung der mindestens einen Pumpvorrichtung und/oder des mindestens einen Aufnahmemittels geregelt wird, wobei über ein Positionsgebungsmittel der Regeleinheit ein geographischer Ort der Vorrichtung erfasst und mit den Sollwerten verglichen und in Abhängigkeit der solchermaßen ermittelten Positionswerte eine Verfahrung der Vorrichtung auf dem Gewässer vorgenommen wird.

Mit dem Verfahren ist es vorteilhafterweise möglich, dass der Transfer des Sedimentes in mindestens ein Abflussorgan eines gestauten Gewässers, in die Nähe eines Abflussorgans eines gestauten Gewässers, über ein Sperrbauwerk eines gestauten Gewässers oder um dieses herum in ein Unterwasser, in ein Fließgewässer und/oder an Land zur Lagerung an einem Lagerort erfolgen kann. Das Verfahren ist damit sehr variabel an die hydromorphologischen, baulichen, geographischen und sonstigen Gegebenheiten des betreffenden Gewässers anpassbar. Besonders bevorzugt wird der Sedimenttransfer automatisiert vorgenommen. Bevorzugt erfolgt eine bathymetrische Steuerung des mindestens einen Aufnahmemittels im Verfahren, es erfolgt also eine örtliche Steuerung des mindestens einen Aufnahmemittels anhand einer topographischen Gestalt des betreffenden Gewässerbodens, wobei diese Informationen als Sollwerte vorgegeben werden. Hierdurch kann das Verfahren besonders effizient durchgeführt werden, insbesondere kann einfach eine Arbeitsbereichsbeschränkung in einem Gewässer umgesetzt werden.

Weitere Vorteile und Einzelheiten der vorliegenden Erfindung werden anhand der in den folgenden Figuren dargestellten Ausführungsbeispiele näher erläutert. Es zeigen:
- Fig. 1:: eine schematische Darstellung einer Ausführungsform der Vorrichtung;
- Fig. 2:: eine schematische Darstellung eines gestauten Gewässers mit verschiedenen Ausführungsbeispielen des Verfahrens;
- Fig. 3:: eine schematische Darstellung einer weiteren alternativen Ausführungsform des Verfahrens; und
- Fig. 4:: eine schematische Darstellung der Ausgestaltung der Regeleinheit.

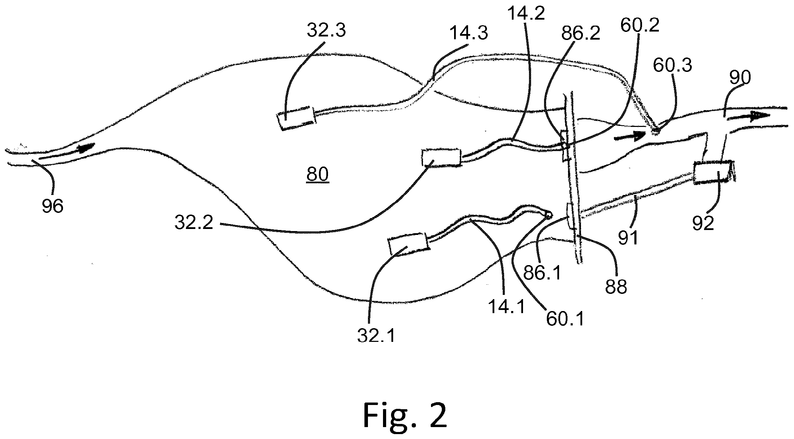

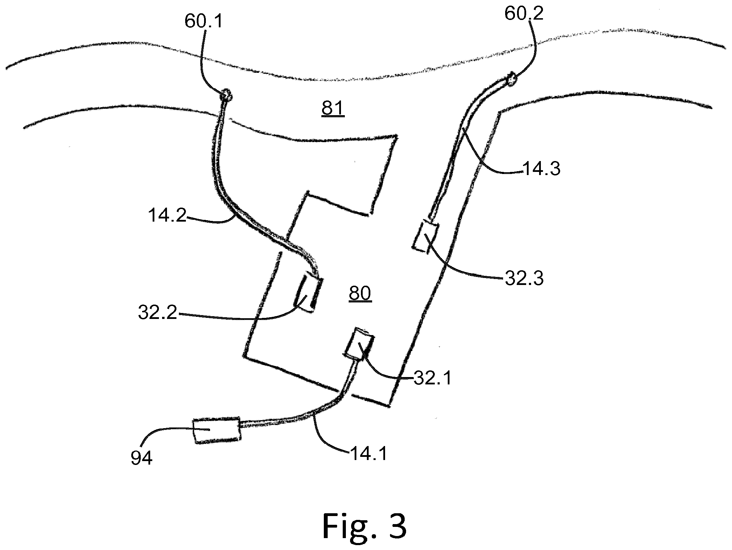

Zunächst sei vorausgeschickt, dass die Erfindung nicht auf die in den Figuren gezeigten Merkmalskombinationen beschränkt ist. Vielmehr sind die jeweils in der Beschreibung einschließlich der Figurenbeschreibung offenbarten Merkmale mit denjenigen in den Figuren angegebenen Merkmalen kombinierbar. Insbesondere sind die Ausführungsbeispiele für das Verfahren, wie in den Fig. 2 und 3 gezeigt, nur einige der Möglichkeiten, wie das Verfahren umgesetzt werden kann. Auch sei darauf hingewiesen, dass ein Aufnahmemittel 16 oder aber eine Zentraleinheit 32 unterschiedlich ausgebildet sein können. Insbesondere kann auch nur eine Messung, Regelung und Steuerung der Vorrichtung bzw. eine Durchführung des Verfahrens erfolgen auf Grundlage der Bestimmungen der Sedimentkonzentration des geförderten Sediments. Ein Positionierungssystem 40 kann, muss aber nicht vorgesehen sein. Auch kann mindestens eine Messvorrichtung 20 und/oder mindestens eine Probenentnahmestelle 50 in mindestens einer Saugleitung 12, also vor einer Pumpvorrichtung 18, angeordnet sein. Auch kann die mindestens eine Saugleitung 12 äußerst kurz ausgebildet sein und auch nur aus einem Flansch oder einer sonstigen Befestigung mit mindestens einem Aufnahmemittel 16 bestehen, wenn die Pumpvorrichtung unmittelbar nach dem Aufnahmemittel 16 angeordnet ist. Die mindestens eine Pumpvorrichtung 18 und das mindestens eine Aufnahmemittel 16 können mit der mindestens einen Saugleitung 12 auch als ein Bauteil ausgebildet sein. Auch können an einer Saugleitung 12 mehrere Aufnahmemittel 16 angeordnet sein. Es können auch mehrere Saugleitungen 12 und/oder mehrere Druckleitungen 14 vorgesehen sein. Des Weiteren sei darauf hingewiesen, dass die in den Patentansprüchen aufgenommenen Bezugszeichen in keiner Weise den Schutzbereich der vorliegenden Erfindung beschränken sollen, sondern lediglich auf die in den Figuren gezeigten Ausführungsbeispiele verweisen.

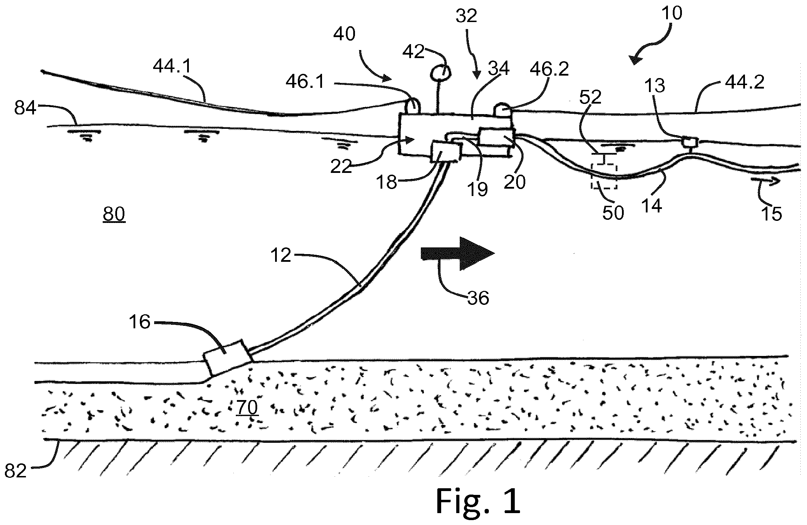

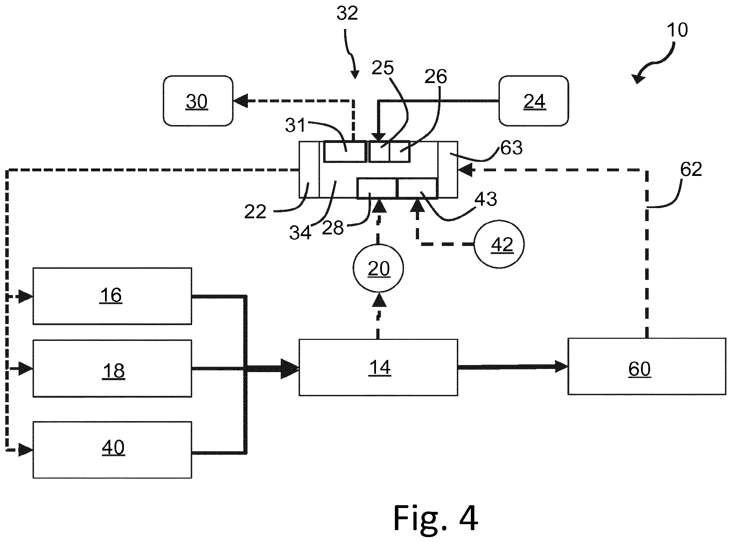

Fig. 1 zeigt in einer schematischen Darstellung den Aufbau der Vorrichtung 10 für einen bevorzugt automatisierten Sedimenttransfer in Gewässern 80. Ein Gewässer 80, das ein gestautes Gewässer wie ein Stausee mit einem Staudamm, aber auch ein natürlicher See, ein Hafenbecken oder ein Fließgewässer sein kann, wobei diese Aufzählung nicht abschließend ist, weist einen Gewässerboden 82 und eine Gewässeroberfläche 84 auf. Auf dem Gewässerboden 82 hat sich eine Schicht Sediment 70 abgelagert. Die Vorrichtung 10 besteht aus einer Zentraleinheit 32 mit einem Ponton 34, die verfahrbar ausgebildet ist. Die Verfahrbarkeit wird über ein Positionierungssystem 40 in Verbindung mit beispielhaft gezeigten Seilen 44.1 und 44.2, die über entsprechende Winden 46.1 und 46.2 betrieben werden, ermöglicht. Es sind jedoch auch andere Möglichkeiten der Herstellung einer Verfahrbarkeit denkbar, insbesondere können auch mehr als zwei Seile 44.1 und 44.2 und mehr als zwei Winden 46.1 und 46.2 vorgesehen sein. So kann beispielsweise am Ponton 34 auch ein Motor zur Herstellung einer Verfahrung vorgesehen sein, bevorzugt in Kombination mit mindestens einer Verankerung des Pontons 34 im Gewässer 80, oder ein Propellerantrieb. Mit einem Positionsgebungsmittel 42, das mit einer Regeleinheit 22 über eine Schnittstelle 43 (siehe Fig. 4) in Verbindung steht, wobei das Positionsgebungsmittel beispielsweise als GPS- oder sonstiger Satelliten-Empfänger ausgebildet sein kann, kann der geographische Ort der Zentraleinheit 32 beziehungsweise des Pontons 34 bestimmt und der Regeleinheit übermittelt werden. Die Zentraleinheit 32 mit dem Ponton 34 wird bevorzugt kontinuierlich verfahren, wobei dann auch das Aufnahmemittel 16 mitbewegt wird und auf dem Gewässerboden 82 Sediment 70 abträgt.

Am Ponton 34 und damit der Zentraleinheit 32 ist eine Pumpvorrichtung 18 und nachfolgend dieser eine Messvorrichtung 20 angeordnet, zwischen denen in dem hier gezeigten Beispiel bevorzugt ein Kompensator 19 vorgesehen ist. Der Kompensator 19 kann, um eine Schwingungs- oder Vibrationsdämpfung oder -unterdrückung zur Verfügung zu stellen, beispielsweise aus einem Gummischlauch bestehen, der bevorzugt eine Länge von mindestens etwa 0,1 Meter, bevorzugt mit einer Länge bis zu etwa 10 Meter aufweist. Die Länge des Kompensators liegt bevorzugt zwischen etwa 0,1 Meter und 10 Meter, weiter bevorzugt zwischen 0,3 Meter und 5 Meter, und noch weiter bevorzugt zwischen 0,5 Meter und 3 Meter. Es ist bei der Länge des Kompensators, der auch eine andere Ausgestaltung als ein Gummischlauch aufweisen und beispielsweise aus verschiedenen Kopplungselementen bestehen kann, im wesentlichen darauf zu achten, dass ein Kompromiss aus guter Handhabbarkeit bei der Installation der Vorrichtung und der Funktion desselben, eine Schwingungs- bzw. Vibrationsunterdrückung oder -dämpfung zur Verfügung zu stellen, gefunden wird. Die mindestens eine Messvorrichtung 20 ist bevorzugt im Sinne der vorliegenden Erfindung nach der mindestens einen Pumpvorrichtung 18 angeordnet. Hierdurch werden Messfehler vermieden, die sich durch Schichtungen im geförderten Sediment-Wasser-Gemisch oder Absetzproblem des Sediments 70 ergeben. Durch die mindestens eine Pumpvorrichtung 18 wird eine Verquirlung des Sediment-Wasser-Gemischs erzeugt, die eine Messung begünstigt. Bevorzugt ist daher die mindestens eine Messvorrichtung 20 etwa 0,3 Meter bis etwas 5 Meter hinter der mindestens einen Pumpvorrichtung angeordnet. Die mindestens eine Messvorrichtung 20 kann auch unter Wasser angeordnet sein.

Die mindestens eine Messvorrichtung 20 kann dabei beispielsweise als Coriolis-Messgerät oder Dichtemesser, als eine radiometrische Messungsvorrichtung oder als magnetisch-induktiver Durchflussmesser ausgebildet sein und führt eine Masse-Durchflussmessung zur Bestimmung einer Sedimentkonzentration im aufgenommenen und geförderten Sediment 70, bevorzugt und wie in Fig. 1 gezeigt, in einer als Schlauch ausgebildeten Druckleitung 14, die zur Transferierung des Sediments 70 ausgebildet ist, durch. Die mindestens eine Druckleitung 14 ist im Sinne der vorliegenden Erfindung auf einer Druckseite der mindestens einen Pumpvorrichtung 16 angeordnet und stellt ein Fördermittel für das Sediment 70 dar. Die Pumpvorrichtung 18 ist über eine ebenfalls als Schlauch ausgebildeten Saugleitung 12, die auf einer Saugseite der Pumpvorrichtung 18 angeordnet ist, mit einem Aufnahmemittel 16, welches beispielsweise als Fräse, Saugdüse, Spüldüse und/oder Saugkopf ausgebildet sein kann, verbunden. Eine Drehzahl und/oder ein Wasserdruck des Aufnahmemittels 16 sind einstellbar. Diese Einstellung kann über die Regeleinheit 22, die der Zentraleinheit 32 zugeordnet ist, eingestellt werden. Die Pumpvorrichtung 18 kann beispielsweise als Kreiselpumpe, Wasserstrahlpumpe, Air-Lift-Vorrichtung oder Drehkolbenpumpe ausgebildet sein. Bei Einsatz einer Air-Lift-Vorrichtung wird am Aufnahmemittel 16 Pressluft eingedüst. Der entstehende Dichteunterschied zwischen dem in der Leitung entstehenden Wasser-Luft-Gemisch und dem umgebenden Wasser führt zu einer starken Strömung in der Leitung, ähnlich einer Wasserstrahlpumpe, nur eben mit Luft. Die Saugleitung 12 ist in diesem Fall der Bereich zwischen Aufnahmemittel 16 und der mindestens einen Eindüsungstelle für die Pressluft, die sich auch unmittelbar am Aufnahmemittel 16 befinden kann. Aufnahmemittel 16, Saugleitung 12 und Pumpvorrichtung 18 können bei einer Air-Lift-Vorrichtung als ein Bauteil ausgebildet sein.

In der Druckleitung 14 ist eine Probeentnahmestelle 50 mit einem Probenhahn 52 angeordnet. Dort kann beispielsweise zur Kalibrierung der Vorrichtung 10, aber auch zur regelmäßigen Überprüfung der geförderten Mischung aus Sediment und Wasser eine Probe genommen werden. Die Druckleitung 14 ist beispielhaft über einen Schwimmer 13 unterhalb der Wasseroberfläche 14 gehalten.

Über das Positionierungssystem 40 ist in einer Verfahrungsrichtung 36, dargestellt durch einen Pfeil, die Zentraleinheit 32 mit dem Ponton 34 und der Regeleinheit 22 verfahrbar. Dabei kann das Positionierungssystem 40 nicht nur das in Fig. 2 dargestellten Seil-Winden-System umfassen, sondern beispielsweise auch Propeller oder sonstige Verstelleinrichtungen.

In einer Förderrichtung 15 wird die Mischung aus Sediment 70 und Wasser durch die Druckleitung 14 an einen anderen Ort verbracht. Die Fig. 2 und 3 zeigen verschiedene Verbringungsmöglichkeiten. Fig. 2 zeigt ein gestautes Gewässer 80 mit einem Zufluss 96 und einem Sperrbauwerk 88 in Form eines Staudammes mit zwei Ablassorganen 86.1 und 86.2, die zum Beispiel einem Grundablass einer Staumauer entsprechen. Es könnten aber auch andere Wasserabläufe eines Gewässers 80 verwendet sein. Es wird über eine Zentraleinheit 32.1 in einer Ausgestaltung des Verfahrens, die in Fig. 2 gezeigt ist, über die Druckleitung 14.1 zu einer Sedimentabgabe 60.1 in die Nähe des Ablassorgans 86.1 Sediment gefördert und transferiert, welches dann, wie aus der WO 2008/122377 A1 bekannt, über das Ablassorgan in ein Unterwasser 90 gelangt. Dabei kann, wie in Fig. 2 dargestellt, vorgesehen sein, dass über einen Stollen 91 das Ablassorgan 86.1 mit einer Kraftwerkseinheit 92, beispielsweise einer Turbine, verbunden ist, soweit das gestaute Gewässer 80 auch der Energieerzeugung dient. In einer zweiten Ausgestaltung des Verfahrens gemäß Fig. 2 wird über eine Zentraleinheit 32.2 und eine Druckleitung 14.2 unmittelbar in ein Ablassorgan 86.2, welches wiederum als Grundablass ausgebildet sein kann, über eine Sedimentabgabe 60.2 Sediment gefördert und transferiert, so dass dieses dann in das Unterwasser 90 gelangt. In einer dritten Ausgestaltung des Verfahrens gemäß Fig. 2 wird über eine Zentraleinheit 32.3 und eine Druckleitung 14.3 aufgenommenes Sediment gefördert und transferiert zu einer Sedimentabgabe 60.3 unmittelbar in das Unterwasser 90 um das Sperrbauwerk 88 herum oder über dieses hinweg.

Fig. 3 zeigt eine weitere alternative Ausgestaltung des Verfahrens mit einem Gewässer 80 in Form eines Hafenbeckens, welches mit einem Fließgewässer 81 verbunden ist. In einer ersten Ausführungsform des Verfahrens wird über eine Zentraleinheit 32.1 und eine Druckleitung 14.1 Sediment gefördert und transferiert zu einem Lagerort 94 zur weiteren Verarbeitung des Sediments oder dessen Lagerung. Der Lagerort 94 befindet sich an Land. Dort können beispielsweise Aufbereitungsanlagen für das Sediment 70 vorgesehen sein, für die es wichtig ist, mit einer vorbestimmten Menge an Sediment 70 versorgt zu werden. In einer zweiten Ausführungsform des Verfahrens wird über eine Zentraleinheit 32.2 und eine Druckleitung 14.2 zu einer Sedimentabgabe 60.1 Sediment gefördert und transferiert und unmittelbar in das Fließgewässer 81 abgegeben. Selbiges erfolgt, jedoch von einem anderen Ort innerhalb des Hafenbeckens, in einer dritten Ausführungsform des Verfahrens über die Zentraleinheit 32.3 und die Druckleitung 14.3 zu einer Sedimentabgabe 60.2 in das Fließgewässer 81.

Fig. 4 zeigt eine schematische Darstellung des Ablaufs des Verfahrens für eine Transferierung von Sediment 70, bevorzugt eine automatische Transferierung, durch die Betriebskosten erheblich gesenkt werden können. Die Vorrichtung 10 umfasst die Zentraleinheit 32 mit dem Ponton 34. Schematisch dargestellt ist die Regeleinheit 22, die auf der Zentraleinheit 32 erhaltene bzw. gespeicherte Daten verarbeitet und hierüber das Aufnahmemittel 16, die Pumpvorrichtung 18 und das Positionierungssystem 40 regelt bzw. steuert. Sollwerte 24, die aus einer hier nicht näher bezeichneten Quelle stammen, werden über eine Schnittstelle 25 einem Speicher 26 zugeführt. Die Sollwerte sind bevorzugt ausgewählt aus einer Gruppe umfassend einen Soll-Räumbereich des zu transferierenden Sediments 70, Förderzeiten, Tiefenangaben des Gewässers 80 und/oder Grenzwerte der transferierbaren Sedimentkonzentration. Der Speicher 26 muss aber nicht vorhanden sein, auch können online über eine Datenfernübertragung die Sollwerte, insbesondere kontinuierlich übermittelt beziehungsweise von der Zentraleinheit 32 abgefragt werden, wobei eine temporäre Speicherung vorgesehen sein kann. Ebenso werden über eine Schnittstelle 28 Messwerte, ermittelt durch die Messvorrichtung 20, der Zentraleinheit 32 zugeführt, wie dies auch der Fall ist betreffend das Positionsgebungsmittel 42 mit der zugeordneten Schnittstelle 43. Dabei können zusätzlich auch aus der Sedimentabgabe 60 gewonnene Daten wie Trübungswerte eines Unterwassers über eine Rückmeldung 62 und eine Schnittstelle 63 erfasst und berücksichtigt werden. Die ermittelten Werte der Messvorrichtung 20, des Positionsgebungsmittels 42 und ggf. der über die Rückmeldung 62 erhaltenen Werte für das abgegebene Sediment, die beispielsweise in Form von Trübungsmessungen vorliegen können, werden mit den in der Speichereinheit 26 vorhandenen Sollwerten 24 verglichen und hieraus Anweisungen der Regeleinheit 22 zur Verfügung gestellt, die eine Leistung der Pumpvorrichtung 18, aber auch ggf. eine Drehzahl oder einen Wasserdruck des Aufnahmemittels 16 als auch eine Positionierung der Vorrichtung 10, insbesondere des Pontons 34 der Zentraleinheit 32, über das Positionierungssystem 40 durchführt. In Abhängigkeit hiervon erfolgt die Förderung über die Saugleitung 12 und die Druckleitung 14 zur Sedimentabgabe 60. Der Sollwert 24 für den Grenzwert der transferierbaren Sedimentkonzentration hängt von dem Zustand des Gewässers ab, in das das Sediment 70 transferiert wird, beispielsweise ein Fließgewässer 81 oder ein Unterwasser 90, oder aber dem Lagerort 94 mit den dort angesiedelten Aufbereitungsanlagen für das Sediment 70. Insbesondere dieser Sollwert 24 ist relevant für die Regelung der Leistung der mindestens einen Pumpvorrichtung 18 und/oder des mindestens einen Aufnahmemittels 16 und/oder der örtlichen Position des mindestens einen Aufnahmemittels 16. Die Regeleinheit 22 kann über eine Schnittstelle 31 Werte an mindestens ein Anzeigemittel 30, das aber nicht notwendigerweise vorhanden sein muss, weitergeben, so dass dort für einen Bediener der Vorrichtung 10 die entsprechenden Werte sichtbar gemacht werden. Auch können die entsprechenden Werte protokolliert und gespeichert werden in der Speichervorrichtung 26. Aber auch sonstige Speicher und Anzeigemöglichkeiten sind denkbar.

Durch das Verfahren und die Vorrichtung 10 ist es vorteilhafterweise möglich, eine automatisierte Sedimentverfrachtung in Gewässern, insbesondere gestauten Gewässern, aber auch Häfen und sonstigen Gewässern, vorzunehmen. Wesentlich ist dabei das Abstellen auf eine Sedimentkonzentration des geförderten Sedimentes, bevorzugt auf der Druckseite der mindestens einen Pumpvorrichtung in der mindestens einen Druckleitung 14, so dass ein Unterwasser oder aber sonstiges Gewässer, in welches das Sediment verfrachtet beziehungsweise transferiert wird, ökologisch verträglich und gezielt mit dem geförderten und transferierten Sediment versorgt werden kann.

## Patentansprüche

1. Verwendung einer Vorrichtung (10) für einen Sedimenttransfer in Gewässern (80, 81, 90)
- mit mindestens einer Saugleitung (12) und mit mindestens einem Aufnahmemittel (16) zur Aufnahme von Sediment (70);
- mit mindestens einer Druckleitung (14) zur Transferierung des aufgenommenen Sediments (70);
- wobei nachfolgend dem mindestens einen Aufnahmemittel (16) mindestens eine Pumpvorrichtung (18) und mindestens eine Messvorrichtung (20) zur Bestimmung einer Sedimentkonzentration des aufgenommenem Sediments (70) angeordnet ist; und
- wobei die Vorrichtung (10) weiterhin eine Regeleinheit (22) umfasst, die eine erste Schnittstelle (25) zur Einspeisung von Sollwerten (24) und eine zweite Schnittstelle (26) für die mindestens eine Messvorrichtung (20) umfasst, und eine Sedimentkonzentration in der mindestens einen Saugleitung (12) und/oder in der mindestens einen Druckleitung (14) bestimmt und in Abhängigkeit von dieser Sedimentkonzentration eine Leistung der Pumpvorrichtung (18) einstellt, wobei die Regeleinheit (22) ein Positionierungssystem (40) mit mindestens einem Positionsgebungsmittel (42) umfasst, so dass über eine Schnittstelle (43) eine örtliche Position dem Aufnahmemittel (16) zur Verfügung stellbar ist und über das Positionierungssystem (40) die Vorrichtung (10) auf einem Gewässer (80) verfahrbar ausgebildet ist,
- wobei der Transfer des Sedimentes (70) in mindestens ein Abflussorgan (86.1, 86.2) eines gestauten Gewässers (80), in die Nähe mindestens eines Abflussorgans (86.1, 86.2) eines gestauten Gewässers (80), über ein Sperrbauwerk (88) eines gestauten Gewässers (80) oder um dieses herum in ein Unterwasser (90) und/oder in ein Fließgewässer (81) erfolgt.

2. Verwendung gemäß einem oder mehreren der vorhergehenden Ansprüche, **dadurch gekennzeichnet, dass** die mindestens eine Messvorrichtung (20) in einer Förderrichtung (15) des aufgenommenen Sediments (70) nach der mindestens einen Pumpvorrichtung (18) angeordnet ist.

3. Verwendung gemäß einem oder mehreren der vorhergehenden Ansprüche, **dadurch gekennzeichnet, dass** zwischen der mindestens einen Pumpvorrichtung (18) und der mindestens einen Messvorrichtung (20) mindestens ein Kompensator (19) zur Schwingungsunterdrückung beziehungsweise Schwingungsdämpfung angeordnet ist.

4. Verwendung gemäß einem oder mehreren der vorhergehenden Ansprüche, **dadurch gekennzeichnet, dass** die Sollwerte (24) ausgewählt sind aus einer Gruppe umfassend einen Soll-Räumbereich des zu transferierenden Sediments (70), Förderzeiten, Tiefenangaben des Gewässers (80) und/oder Grenzwerte der zu transferierenden Sedimentkonzentration.

5. Verwendung gemäß einem oder mehreren der vorhergehenden Ansprüche, **dadurch gekennzeichnet, dass** diese mindestens eine Probenentnahmestelle (50) mit mindestens einem Probenhahn (52) umfasst.

6. Verwendung gemäß Anspruch 5, **dadurch gekennzeichnet, dass** die mindestens eine Probenentnahmestelle (50) in Förderrichtung (15) des aufgenommenen Sedimentes (70) nach der mindestens einen Messvorrichtung (20) angeordnet ist.

7. Verwendung gemäß einem oder mehreren der vorhergehenden Ansprüche, **dadurch gekennzeichnet, dass** der Sedimenttransfer automatisiert vorgenommen wird.

## Claims

1. Use of device (10) for a sediment transfer in waters (80, 81, 90)
- with at least one suction line (12) and with at least one receiving means (16) for receiving sediment (70);
- with at least one pressure line (14) for transferring the received sediment (70);
- wherein at least one pump device (18) and at least one measuring device (20) for determining a sediment concentration of the received sediment (70) is arranged downstream of the at least one receiving means (16); and
- wherein the device (10) further comprises a control unit (22), which comprises a first interface (25) for feeding target values (24) and a second interface (26) for the at least one measuring device (20), and determines a sediment concentration in the at least one suction line (12) and/or in the at least one pressure line (14) and adjusts a power of the pumping device (18) depending on this sediment concentration, wherein the control unit (22) comprises a positioning system (40) with at least one position determining means (42), so that a local position can be made available to the receiving means (16) via an interface (43) and the device (10) is designed to be movable on a body of water (80) via the positioning system (40); and
- wherein the transfer of the sediment (70) takes place into at least one discharge member (86.1, 86.2) of a dammed water body (80), into the vicinity of at least one discharge member (86.1, 86.2) of a dammed water body (80), via a barrage (88) of a dammed water body (80) or around it into a downstream water (90) and/or into a watercourse (81).

2. Use according to claim 1, **characterized in that** the at least one measuring device (20) is arranged in a conveying direction (15) of the received sediment (70) subsequent to the at least one pumping device (18).

3. Use according to one or more of the preceding claims, **characterized in that** between the at least one pumping device (18) and the at least one measuring device (20) at least one compensator (19) for oscillation suppression or oscillation damping is arranged.

4. Use according to one or more of the preceding claims, **characterized in that** the target values (24) are selected from a group comprising a set clearing area of the sediment (70) to be transferred, conveying times, depth indications of the water body (80) and/or limit values of the sediment concentration to be transferred.

5. Use according to one or more of the preceding claims, **characterized in that** it comprises at least one sampling point (50) with at least one sampling tap (52).

6. Use according to claim 5, **characterized in that** the at least one sampling point (50) is arranged in the conveying direction (15) of the received sediment (70) subsequent to the at least one measuring device (20).

7. Use according to one or more of the preceding claims, **characterized in that** the sediment transfer is performed automatically.

## Revendications

1. Utilisation d'un dispositif (10) pour transférer des sédiments dans les corps d'eau (80, 81, 90)
- doté d'au moins une conduite d'aspiration (12) avec au moins un moyen de collecte (16) pour collecter les sédiments (70) et
- doté d'au moins une conduite de refoulement (14) transférer les sédiments collectés (70),
- derrière l'au moins un moyen de réception (16) étant agencés au moins un dispositif de pompage (18) et au moins un dispositif de mesure (20) pour déterminer la concentration des sédiments collectés (70) et
- le dispositif (10) comprenant en outre une unité de réglage (22) qui comprend une première interface (25) pour l'enregistrement des valeurs de consigne (24) et une deuxième interface (26) pour l'au moins un dispositif de mesure (20) et qui définit une concentration de sédiments dans l'au moins une conduite d'aspiration (12) et/ou dans l'au moins une conduite de refoulement (14) et régule une puissance du dispositif de pompage (18) en fonction de cette concentration de sédiments, l'unité de réglage (22) comprenant un système de positionnement (40) doté d'au moins un moyen de positionnement (42), de sorte qu'une position géographique peut être fournie au moyen de collecte (16) par une interface (43) et que le dispositif (10) peut être déplacé sur un corps d'eau (80) par le système de positionnement (40) et
- dans laquelle le transfert des sédiments (70) a lieu dans au moins un organe d'évacuation (86.1, 86.2) d'un corps d'eau artificiel (80), à proximité d'au moins un organe d'évacuation (86.1, 86.2) d'un corps d'eau artificiel (80), au-dessus d'un ouvrage de retenue (88) d'un corps d'eau artificiel (80) ou autour de celui-ci dans un bief aval (90) et/ou dans un cours d'eau (81).

2. Utilisation selon une ou plusieurs des revendications précédentes, **caractérisé en ce que** l'au moins un dispositif de mesure (20) est agencé en aval de l'au moins un dispositif de pompage (18) dans une direction de transport (15) des sédiments collectés (70).

3. Utilisation selon une ou plusieurs des revendications précédentes, **caractérisé en ce qu'**entre l'au moins un dispositif de pompage (18) et l'au moins un dispositif de mesure (20) est agencé au moins un compensateur (19) pour supprimer ou amortir les vibrations.

4. Utilisation selon une ou plusieurs des revendications précédentes, **caractérisé en ce que** les valeurs de consigne (24) sont sélectionnées parmi un groupe comprenant une zone spatiale de consigne des sédiments à transférer (70), des temps de transport, des indications de profondeur du corps d'eau (80) et/ou des valeurs limites de la concentration de sédiments à transférer.

5. Utilisation selon une ou plusieurs des revendications précédentes, **caractérisé en ce que** celui-ci comprend au moins un point d'échantillonnage (50) avec au moins un robinet d'échantillonnage (52).

6. Utilisation selon la revendication 5, **caractérisé en ce que** l'au moins un point d'échantillonnage (50) est agencé en aval de l'au moins un dispositif de mesure (20) dans la direction de transport (15) des sédiments collectés (70).

7. Utilisation selon une ou plusieurs des revendications précédentes, **caractérisé en ce que** le transfert de sédiments est effectué automatiquement.
